# EUROPÄISCHE PATENTSCHRIFT

(11) **EP 2 631 993 B1**
(45) Veröffentlichungstag und Bekanntmachung des Hinweises auf die Patenterteilung: **28.01.2015**
(21) Anmeldenummer: 12007325.9
(22) Anmeldetag: 24.10.2012
(51) Int. Cl.: H01Q 13/02, H01Q 13/06, H01Q 15/08, H01Q 19/08, H01Q 1/22, G01F 23/284

(54) **Dielektrische Antenne und nach dem Radar-Prinzip arbeitendes Füllstandmessgerät**
Dielectric antenna and fill level measuring device operating according to the radar principle
Antenne diélectrique et appareil de mesure du niveau de remplissage fonctionnant selon le principe de radar

(30) Priorität: 23.02.2012 DE 102012003398
(43) Veröffentlichungstag der Anmeldung: 28.08.2013
(73) Patentinhaber: Krohne Messtechnik GmbH, 47058 Duisburg (DE)
(72) Erfinder: Baer, Christoph, Dipl.-Ing., 45525 Hattingen (DE); Schulz, Christian, Dipl.-Ing., 44791 Bochum (DE); Gerding, Michael, Dipl.-Ing., 44805 Bochum (DE)
(74) Vertreter: Gesthuysen Patent- und Rechtsanwälte

(56) Entgegenhaltungen:
- EP-A1- 2 112 482
- EP-A2- 1 089 377
- DE-A1- 19 722 547
- US-A- 2 887 684
- US-A1- 2010 202 061
- US-B1- 6 462 717

## Beschreibung

Die Erfindung betrifft eine dielektrische Antenne mit mindestens einem Speiseelement und mit mindestens einer aus mindestens einem dielektrischen Material bestehenden Linse, wobei das Speiseelement elektromagnetische Strahlung emittiert und die Linse mit der elektromagnetischen Strahlung beaufschlagt, wobei die Linse die elektromagnetische Strahlung weiterführt und abstrahlt. Ferner betrifft die Erfindung ein nach dem Radar-Prinzip arbeitendes Füllstandmessgerät.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte Laufzeitverfahren baut auf der physikalischen Gesetzmäßigkeit, dass die Laufstrecke z. B. eines elektromagnetischen Signals gleich dem Produkt aus Laufzeit und Ausbreitungsgeschwindigkeit ist. Im Fall einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Der Füllstand lässt sich aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung.

Häufig werden dielektrische Resonatoren als Antennen eingesetzt. Solche dielektrischen Antennen haben ein ähnliches Resonanzverhalten wie Hohlleiter, können aber, da sie nicht über metallische Wandungen verfügen, elektromagnetische Energie abstrahlen und damit als Antennen fungieren. Aus unterschiedlichen Bereichen der Technik ist dabei bereits eine Vielzahl von Bauformen bekannt, bei denen jeweils ein dielektrisches Material, z. B. eine Keramik, der Führung und Abstrahlung der elektromagnetischen Wellen dient. Meist werden verlustarme Materialien mit niedriger Permittivität (eine andere Bezeichnung für die Permittivität ist dielektrische Leitfähigkeit) benutzt. Verwendet werden beispielsweise Teflon oder Polypropylen.

Insbesondere bei Schüttgütern können sich Schwierigkeiten bei der Ermittlung des Füllstands durch das Auftreten von Schüttkegeln ergeben. Bei jeglicher Art von Medium können sich weiterhin in dem Behälter Objekte, wie z. B. ein Rührwerk befinden, die die Radarwellen reflektieren und die Messung des Füllstands dadurch stören. Daher ist es in manchen Anwendungen vorteilhaft, nicht nur einen Bereich der Oberfläche des Mediums zu vermessen, sondern die Verteilung des Mediums, d. h. den Oberflächenverlauf zu ermitteln. Folglich werden in einigen Anwendungen für mehrere Messpunkte oder Messbereiche, die entsprechend auf der Oberfläche des Mediums verteilt sind, die jeweiligen Abstände zur Antenne bestimmt.

Um solche Oberflächenprofile zu vermessen, ist es von besonderem Vorteil, wenn die verwendeten Antennen eine möglichst schmale Hauptabstrahlrichtung - d. h. eine schmale Richtcharakteristik in Hauptabstrahlrichtung - aufweisen. Eine schmale Richtcharakteristik erfordert dabei zumeist eine große Apertur - also Öffnungsfläche - des Abstrahlabschnitts. Damit die Apertur auch im Sinne einer schmalen Hauptabstrahlrichtung genutzt wird, muss die von dem Abstrahlabschnitt der Antenne abgestrahlte elektromagnetische Strahlung eine möglichst ebene Phasenfront aufweisen. Bei im Stand der Technik bekannten Hornstrahlem geht eine schmale Richtcharakteristik mit großen geometrischen Abmessungen der Antenne einher. In der industriellen Messtechnik werden jedoch zumeist eher kleine und kompakte Messgeräte bevorzugt. Verwendung finden daher im Stand der Technik auch dielektrische Linsen, die zumeist aus einer Mischung aus einem Harz - beispielsweise Polypropylen, Polyethylen oder Polystyren - und einem Keramikpulver bestehen. Der Effekt beispielsweise von konvexen Verzögerungslinsen besteht darin, dass die Linsen die achsnahen Strahlen gegenüber den Randstrahlen verzögern. Die gebrochenen Strahlen sind nach dem Durchgang durch die Linse parallel und phasengleich.

Die EP 1 701 142 A2 beschreibt eine Anordnung zur Messung einer Oberflächenverteilung eines Mediums nach dem Radar-Prinzip, wobei eine Mehrzahl von Sende- und eine Mehrzahl von Empfangsantennen verwendet werden. Diese Sende- und Empfangsantennen werden einzeln miteinander kombiniert, um mehrere Bereiche der Oberfläche des Mediums zu vermessen. Aufgrund der Vielzahl der Antennen ist der Aufbau jedoch sehr aufwändig.

Details zur Ausgestaltung einer dielektrischen Antenne, die über einen Hohlleiter als Speiseelement mit einem linsenartigen Abstrahlabschnitt verfügt, finden sich beispielsweise in der DE 10 2008 020 036 A1.

Die DE 10 2008 008 715 A1 zeigt eine zumindest in Senderichtung ellipsoidal ausgestaltete Linsenantenne. Durch die Form der Antenne werden sphärische Wellen in Wellen mit parallelen Phasenfronten umgewandelt. Wird der Abstand zwischen dem Speiseelement und der Antenne geändert, so ändert sich damit auch die Abstrahlrichtung. Nachteilig daran ist jedoch, dass bei der Verschiebung der Abstrahlrichtung die Antennencharakteristik verschlechtert wird. Damit geht eine Reduzierung der Auflösung an unterschiedlichen Stellen des Messobjekts, d. h. der Oberfläche des Mediums im vermessenen Behälter, einher.

Der US 2003/0006941 A1 lässt sich eine kreisförmige Linse für ein Radar-Messgerät entnehmen. Dabei sind mehrere Speiseelemente vorgesehen, die einzeln angesteuert werden, um gezielt die Abstrahlrichtung zu verändern.

Der DE 38 40 451 A1 lässt sich eine Linsenantenne mit einem Speiseelement entnehmen. Die Linsenkontur ist dabei besonders ausgestaltet, so dass Kugelwellen in einigen Ebenen in Wellen mit ebenen und in anderen Ebenen in Wellen mit nichtebenen Phasenfronten umgewandelt werden. Um die Ebenen der Abstrahlung einzustellen, ist vorgesehen, das Speiseelement zu drehen. Weiterhin kann für Justierzwecke der Abstand zwischen Speiseelement und Antenne verändert werden.

In der DE 602 03 320 T2 wird eine Vorrichtung zur Kalibrierung einer Radarantenne beschrieben. Dabei ist eine Linse vorgesehen, die eine konkave und eine konvexe Seite aufweist.

Im Stand der Technik ist insgesamt eine Vielzahl von Antennen bekannt, mit denen sich Oberflächenmessungen von Medien realisieren lassen. Problematisch ist zumeist der große Aufwand bzw. Platzbedarf oder die nicht gleichmäßige Messgenauigkeit in allen vermessenen Raumbereichen.

Der Erfindung liegt daher die Aufgabe zugrunde, ein Füllstandmessgerät mit einer dielektrischen Antenne vorzuschlagen, das es erlaubt, eine Oberfläche eines Mediums mit im Wesentlichen konstanter Messgenauigkeit zu vermessen.

Ein erfindungsgemäßes Füllstandsmeßgerät ist durch die anhängenden Patentansprüche definiert.

Die aufgezeigte Aufgabe ist erfindungsgemäß zunächst und im Wesentlichen bei der in Rede stehenden Antenne dadurch gelöst, dass die Linse mindestens eine äußere Komponente und eine innere Komponente aufweist. Dabei beaufschlagt das Speiseelement die Linse über die innere Komponente mit der elektromagnetischen Strahlung. Weiterhin weist die äußere Komponente zumindest eine teilweise sphärisch ausgestaltete Abstrahlfläche und eine zumindest teilweise sphärisch ausgestaltete Innenfläche auf, und die innere Komponente weist eine zumindest teilweise sphärisch ausgestaltete Kontaktfläche auf. Dabei sind die Kontaktfläche der inneren Komponente und die Innenfläche der äußeren Komponente in einem Ausführungsbeispiel derartig ausgestaltet und aufeinander abgestimmt, dass bei mindestens einer Anordnung von innerer Komponente und äußerer Komponente zueinander die innere Komponente an der äußeren Komponente im Wesentlichen spaltfrei anliegt und die äußere Komponente die innere Komponente zumindest teilweise umgibt. Die erfindungsgemäße Antenne besteht aus zwei Komponenten, die die elektromagnetische Strahlung des Speiseelements führen - und bei ggf. vorkommenden dielektrischen Grenzschichten brechen und umlenken - und in Richtung der zu vermessenen Oberfläche abstrahlen. Die zwei Komponenten sind für die Übertragung von elektromagnetischen Signalen bzw. elektromagnetischer Strahlung ausgelegt. Dabei sind die Komponenten derartig zueinander angeordnet, dass die Kontaktfläche der inneren Komponente dem Speiseelement abgewandt und der Innenfläche der äußeren Komponente zugewandt ist. Die Abstrahlfläche der äußeren Komponente ist im Wesentlichen die Abstrahlfläche der Linse.

Die elektromagnetische Strahlung des Speiseelements weist zumeist im Bereich des Eintritts in die innere Komponente sphärische Phasenfronten auf, aus denen sich über die Linse Wellen mit ebenen Phasenfronten ergeben. Relevant für die Umwandlung der Wellenform sind dabei u. a. die Laufzeiten der Wellen in der äußeren und der inneren Komponente, der Ort des Einspeisepunktes - d. h. der Stelle, an der das Speiseelement die innere Komponente mit den Kugelwellen beaufschlagt - relativ zur Linse und der Speisewinkel des Speiseelements, das Maß der Beugung der Wellen in den zwei Komponenten und die Größe der effektiven Apertur, also der Öffnungsweite der Antenne.

Je nach den gegebenen Rahmenbedingungen oder Anforderungen lassen sich die relevanten Größen wie die Dimensionierung der inneren und äußeren Komponente, die Ausgestaltung und Anordnung des Speiseelements usw. festlegen. Den Berechnungen lassen sich beispielsweise Laufzeit- und Brechungsüberlegungen zugrunde legen. Ein geeignetes Laufzeitkriterium für die Auslegung ist, dass für die Erzeugung einer ebenen Phasenfront die Laufzeit unterschiedlicher Strahlen vom Einspeisepunkt, über die innere und äußere Komponente hin zu einer Ebene senkrecht zur Ausbreitungsrichtung der eben Phasenfrontgleich sein muss. Dabei ist zu beachten, dass die Ausbreitungsgeschwindigkeit c von elektromagnetischen Wellen im durchlaufenen Material (gekennzeichnet durch die Permittivität εᵣ) durch folgende Abhängigkeit beschrieben werden kann: c = c₀ / √εᵣ mit der Vakuum-Lichtgeschwindigkeit c₀.

Zum anderen ist die Brechung der elektromagnetischen Strahlung zu berücksichtigen, die durch die äußere und innere Komponente erzeugt wird. Dabei ist das Snelliussche Brechungsgesetz relevant, das bei der Brechung am Übergang zwischen zwei von der Welle durchlaufenen Materialien besagt, dass jeweils das Produkt aus der Phasengeschwindigkeit im jeweiligen Material und dem Sinus des Winkels der Welle zum Einfallslot, das senkrecht auf der Grenzfläche zwischen den Materialen steht, gleich ist. Die Phasengeschwindigkeit ergibt sich dabei aus der Wurzel der jeweiligen Permittivität. Bei der Betrachtung der Linse der erfindungsgemäßen Antenne ist dabei zu beachten, dass in dem Fall, dass die innere und die äußere Komponente unterschiedliche Permittivitäten aufweisen, das Brechungsgesetz zweimal anzuwenden ist. Wird insbesondere die Permittivität der äußeren Komponente größer als die Permittivität der inneren Komponente gewählt, so kann dadurch die Apertur vergrößert werden. Wird die Permittivität der äußeren Komponente jedoch kleiner als die Permittivität der inneren Komponente gewählt, so werden die Strahlen dadurch am Übergang vom Lot weggebrochen und nähern sich in der Apertur dem gewünschten parallelen Strahlengang an. Alle weiteren Größen lassen sich aus entsprechenden geometrischen Betrachtungen ermitteln. Ist insbesondere die innere Komponente eine Kugel mit einem vorgebbaren Radius, so entspricht das Lot an jeder Stelle einer Geraden durch den Kugelmittelpunkt. Die beiden vorgehenden Betrachtungen erlauben die Dimensionierung der inneren und der äußeren Komponente. Dabei sind weiterhin noch die Art des Speiseelements und dessen Anordnung relativ zu den zwei Komponenten relevant.

Die innere und/oder die äußere Komponente lassen sich dabei homogen oder inhomogen ausgestalten. Eine homogene Ausgestaltung ermöglicht zwischen Speiseelement und Antenne beliebig viele relative Einstellungen, die jeweils im Wesentlichen die gleiche Strahlungscharakteristik zur Folge haben und sich nur hinsichtlich der Richtung der Hauptabstrahlung unterscheiden. Dabei stellt sich zumeist eine Hauptkeule mit mehreren Nebenkeulen ein, und diese Abstrahlanordnung wird entsprechend geschwenkt, um mittels einer Antenne mehrere Raumbereiche vermessen zu können.

In der Variante einer inhomogenen Ausgestaltung gibt es nur eine beschränkte Anzahl von diskreten Anordnungen zueinander. Dabei kann jedoch ggf. eine besondere Optimierung der Abstrahlcharakteristiken erzielt werden. Die spaltfreie Anordnung zwischen innerer Komponente und äußere Komponente bezieht sich in einer Ausgestaltung auf einen permanenten Zustand und ist in einer alternativen Ausgestaltung ein temporärer Zustand, d. h. während des Betriebes der Antenne als Teil eines Füllstandmessgerätes gibt es mehrere Einstellungen - und insbesondere Abstände - der Komponenten zueinander; Letzteres vor allem für den Fall, dass der Abstand zwischen der inneren Komponente und der äußeren Komponente variabel ist.

In einer Ausgestaltung ist vorgesehen, dass die innere Komponente beweglich - insbesondere drehbar - mit der äußeren Komponente verbunden ist. Durch die relative Bewegung zwischen innerer und äußerer Komponente lässt sich die Abstrahlcharakteristik der Antenne derartig verschieben, dass in der Anwendung der erfindungsgemäßen Antenne bei einem Füllstandmessgerät beispielsweise unterschiedliche Raumbereiche eines Behälters vermessen werden. Ist beispielsweise das Speiseelement fest mit der inneren Komponente verbunden bzw. folgt das Speiseelement der Bewegung der inneren Komponente, so folgt bei einer Drehung der inneren Komponente die Abstrahlrichtung der elektromagnetischen Welle dieser Drehung und dadurch breitet sich die Welle auch in einen anderen Raumbereich hinein aus. Dabei kann die Drehung kontinuierlich oder in diskreten Schritten erfolgen. Dies ist u. a. auch davon abhängig, wie die innere Komponente, die äußere Komponente und das Speiseelement ausgestaltet und relativ zueinander angeordnet sind. In einer alternativen Ausgestaltung ist die innere Komponente fest mit der äußeren Komponente verbunden.

Bei einer weiteren Ausgestaltung der Erfindung sind die innere Komponente und die äußere Komponente einstückig ausgebildet, die innere Komponente und die äußere Komponente der Antenne bilden also gleichsam einen inneren Bereich und einen äußeren Bereich einer einstückig ausgebildeten Antenne.

Eine weitere Ausgestaltung sieht vor, dass die äußere Komponente teilweise als Kugelschale oder als Teil einer Hohlkugel ausgestaltet ist. Die äußere Komponente ist in der Ausgestaltung als Hohlkugel der inneren Komponente mit der konkaven Seite zugewandt, und die konvexe Seite zeigt von der inneren Komponente fort. Die äußere Komponente ist dabei insbesondere derartig ausgestaltet, dass sie die innere Komponente zumindest teilweise aufnimmt.

Die innere Komponente ist in einer Ausgestaltung im Wesentlichen als Kugel oder Kugelschale ausgeführt, und ist in einer alternativen Ausgestaltung zumindest teilweise als Kugel ausgeführt. Handelt es sich bei der inneren Komponente um eine Kugel und ist die äußere Komponente als Teil einer Hohlkugel ausgestaltet, so sind in einer Ausgestaltung die Radien der Komponente so gewählt und aufeinander abgestimmt, dass bei einer relativen Anordnung zueinander die innere Komponente an der Innenfläche der äußeren Komponente angeordnet ist und diese im Wesentlichen spaltfrei berührt. In einer damit einhergehenden oder dazu alternativen Ausgestaltung sind die Radien der inneren Komponente und der äußeren Komponente derartig ausgestaltet und aufeinander abgestimmt, dass die äußere Komponente zumindest die Hälfte der als Kugel ausgestalteten inneren Komponente umfasst.

In einer Ausgestaltung ist vorgesehen, dass die äußere Komponente und die innere Komponente aus Materialien bestehen, die im Wesentlichen unterschiedliche Permittivitäten aufweisen. Unterscheiden sich die Permittivitäten, so kann damit insbesondere die Lenkung der Wellen in den Komponenten zusätzlich beeinflusst werden und stehen dadurch weitere Gestaltungsfaktoren für die Linse und deren Abstrahlcharakteristik zur Verfügung. In einer Ausgestaltung sind die Permittivitäten so hoch, dass sich der Vorteil ergibt, dass eine Druck- und/oder Explosionsbarriere durch die Linse gebildet wird. Je nach Ausgestaltung besteht die Linse aus einem dielektrischen Material oder aus mindestens zwei dielektrischen Materialien.

Eine Ausgestaltung besteht darin, dass der Abstand zwischen dem mindestens einen Speiseelemente und der inneren Komponente veränderbar ist. Über die Variation des Abstands zwischen Speiseelement und innerer Komponente, über die das Speiseelement die elektromagnetische Strahlung in die Linse einkoppelt, ändert sich die Wellenführung, die die eingestrahlten Wellen durch die aus innerer und äußerer Komponente gebildeten Linse erfahren. Ist der Abstand variabel, so kann bei der eingebauten Antenne die Strahlcharakteristik verändert werden, um weitere Messwerte zu erhalten. In einer alternativen Ausgestaltung ist die innere Komponente direkt vom Speiseelement kontaktiert und der Abstand bleibt konstant. In einer weiteren Ausgestaltung ist das Speiseelement derartig ausgestaltet, dass der Abstand des Ausgangspunkts der Kugelwelle, die von dem Speiseelement emittiert werden, zur inneren Komponente variabel ist.

In einer vorteilhaften Ausgestaltung sind mehrere Speiseelemente, mindestens eine Elektronikeinheit und mindestens ein Verteilernetzwerk vorgesehen. Dabei erzeugt die Elektronikeinheit mindestens ein elektromagnetisches Signal. Weiterhin ist über das Verteilernetzwerk einstellbar, welches Speiseelement oder welche Speiseelemente das von der Elektronikeinheit erzeugte elektromagnetische Signal oder ein davon abhängiges elektromagnetisches Signal emittiert/emittieren. In dieser Ausgestaltung sind mehrere Speiseelemente vorgesehen, die vorzugsweise an unterschiedlichen Bereichen mit der inneren Komponente verbunden sind und die daher vorzugsweise auch zu unterschiedlichen Ausbreitungsrichtungen der von der Linse ausgestrahlten elektromagnetischen Strahlung führen. In einer damit verbundenen Ausgestaltung unterscheiden sich auch die zugeordneten Ausstrahlungscharakteristiken voneinander, die sich durch die einzelnen Speiseelemente ergeben. In einer weiteren Ausgestaltung sind mehrere Speiseelemente derartig ausgestaltet und aufeinander abgestimmt, dass sie gemeinsam eine bestimmte Strahlungscharakteristik in Verbindung mit der Linse und ggf. einer zugeordneten Orientierung zwischen Speiseelementen, innerer und/oder äußerer Komponente erzeugen. Durch das Verteilungsnetzwerk lassen sich die einzelnen Speiseelemente auswählen, womit auch die Auswahl des jeweils ausgemessenen Raumbereichs bzw. der zugeordneten Strahlungscharakteristik einhergeht. Das elektromagnetische Signal ist dabei die elektromagnetische Strahlung, die das Speiseelement emittiert.

In den Ausgestaltungen ist mindestens eine Drehvorrichtung vorgesehen, die die innere Komponente innerhalb der äußeren Komponente schwenkt. Ist insbesondere die innere Komponente mit dem Speiseelement oder den Speiseelementen fest verbunden, so führt ein Drehen der inneren Komponente mit dem/den Speiseelement/en zu einer Bewegung der jeweiligen Strahlungscharakteristik relativ zum Behälter oder Raum, innerhalb dessen gemessen wird. In einer weiteren Ausgestaltung werden mehrere Bewegungen, insbesondere Drehungen der inneren Komponente innerhalb der äußeren Komponente einander überlagert.

In einer Ausgestaltung ist das mindestens eine Speiseelement zumindest teilweise als Hohlleiter und/oder als Hornstrahler und/oder als Patchantenne und/oder aus einem elektrischen Faserleiter bestehend ausgestaltet. Bei der Ausgestaltung des Speiseelements ist die Art der Phasenfrontkrümmung bedeutsam für die Ausgestaltung der Linse. Bei einer Speisung der Linse durch einen Hohlleiter als Speiseelement wird der Hohlleiter auf die Oberfläche der inneren dielektrischen Komponente gesetzt. Dabei hat die Permittitivät des Dielektrikums, mit dem der Hohlleiter gefüllt ist, in Relation zur Permittiviät der inneren Komponente Einfluss auf die Anpassung des Übergangs zwischen Hohlleiter und innerer Komponente. Der Hohlleiter kann beispielsweise starr, gerade, gebogen, flexibel, einstückig oder mehrteilig, z. B. aus Scheiben gefertigt sein. Alternativ wird ein Hornstrahler als Speiseelement verwendet. Um die geometrische Länge der Antenne zu verkürzen, wird in einer Variante nur das letzte Stücke des Hornstrahlers verwendet, dessen Anregung derartig erfolgen, dass am Ende des Horns dieselbe Phasenfront wie bei normaler Hornlänge entsteht. Eine weitere Alternative besteht in der Verwendung von Patchantennen, die beispielsweise direkt auf der inneren Komponente angebracht werden. Ein Vorteil der Patchantennen besteht in der Verkleinerung der Baugröße der Antenne. Eine weitere Variante besteht darin, dass als Speiseelement ein aus einem geeigneten Dielektrikum gefertigter Faserleiter verwendet wird.

Weiterhin wird die zuvor hergeleitete und aufgezeigte Aufgabe in einer weiteren Lehre der Erfindung bei einem eingangs genannten nach dem Radar-Prinzip arbeitendes Füllstandmessgerät dadurch gelöst, dass es mindestens eine Antenne nach einer der obigen Ausgestaltungen aufweist.

Im Einzelnen gibt es eine Vielzahl von Möglichkeiten, die erfindungsgemäße Antenne und das erfindungsgemäße Füllstandmessgerät auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge verdeutlichende Darstellung einer Antenne im Schnitt mit einer sich ergebenden Strahlungscharakteristik,
- Fig. 2: eine schematische, im Wesentlichen die funktionalen Wirkzusammenhänge verdeutlichende Darstellung einer Antenne mit zugeordneten Elementen gemäß einer ersten Variante,
- Fig. 3: eine schematische, im Wesentlichen die funktionalen Wirkzusammenhänge verdeutlichende Darstellung einer Antenne mit zugeordneten Elementen gemäß einer zweiten Variante und
- Fig. 4: eine schematische und nicht maßstäbliche Darstellung einer Füllstandmessung mit einem erfindungsgemäßen Füllstandmessgerät.

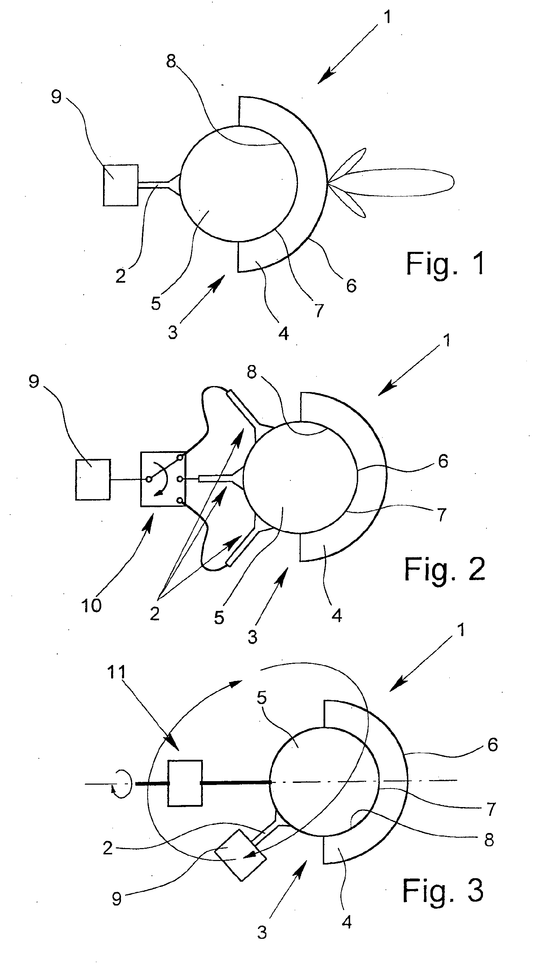

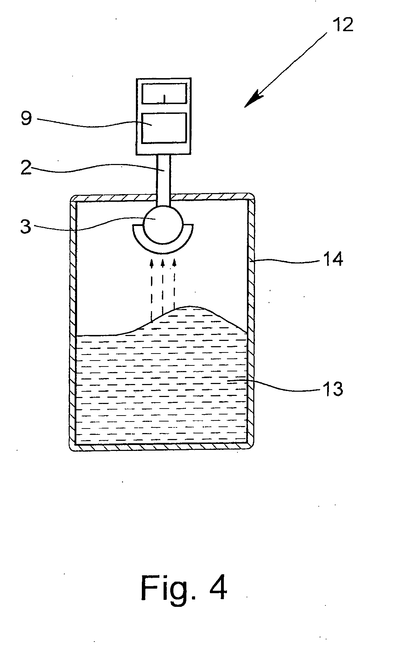

In der Fig. 1 ist ein Schnitt durch eine schematisch dargestellte erfindungsgemäße Antenne 1 mit einer sich einstellenden angedeuteten Abstrahlungscharakteristik dargestellt. In Fig. 2 und Fig. 3 ist jeweils schematisch eine Variante der erfindungsgemäßen Antenne 1 dargestellt. Die Fig. 4 zeigt schematisch und nicht maßstabsgerecht einen Messaufbau zur Messung der Oberfläche eines Mediums mit einem erfindungsgemäßen Füllstandmessgerät.

Die Fig. 1 zeigt eine erfindungsgemäße Antenne 1. Ein Speiseelement 2 emittiert dabei eine elektromagnetische Strahlung - beispielsweise in Form von Kugelwellen - und beaufschlagt damit eine dielektrische Linse 3. Die Linse 3 besteht dabei aus einer äußeren Komponente 4 und einer inneren Komponente 5. Die äußere Komponente 4 hat in diesem Beispiel die Form eines Teils einer Hohlkugel, die hier die Hälfte der Halbkugel umfasst. Dargestellt ist, wie sich an der Stelle der außen gelegenen Abstrahlfläche 6 der äußeren Komponente 4, die gegenüber dem Speiseelement 2 liegt, eine Abstrahlung in Form einer Hauptkeule und hier zweier Nebenkeulen ausbildet. An der Innenfläche 7 der äußeren Komponente 4 liegt im gezeigten Beispiel im Wesentlichen spaltfrei die innere Komponente 5 mit einer Kontaktfläche 8 an. Die innere Komponente 5 ist dabei als Kugel ausgestaltet. Die relevanten Radien der inneren Komponente 5 und der äußeren Komponente 4 sind dabei derartig aufeinander abgestimmt, dass die innere Komponente 5 genau in die äußere Komponente 4 passt. In alternativen - hier nicht dargestellten- Ausgestaltungen sind die innere und äußere Komponente nur abschnittsweise sphärisch ausgestaltet oder verfügen über andere, zu einander passende Geometrien, wobei bei unterschiedlichen Anordnungen ggf. auch zwischen beiden Komponenten ein Spalt oder Abstand bestehen kann.

Eine Elektronikeinheit 9 erzeugt die elektromagnetische Strahlung, die von dem Speiseelement 2 emittiert und mit der die Linse 3 beaufschlagt wird. In diesem Beispiel liegt die Hauptabstrahlrichtung der Linse 3 dem Speiseelement 2 - bezogen auf die kugelförmige innere Komponente 5 - diametral gegenüber. Davon ausgehend ergibt sich, dass eine Veränderung des Bereichs, über den das Speiseelement 2 die Linse 3 mit der elektromagnetischen Strahlung beaufschlagt, auch zu einer Änderung der Hauptabstrahlrichtung führt. Der symmetrische Aufbau der Linse 3 geht dabei mit im Wesentlichen gleichen Abstrahlcharakeristika einher. Daher ist es möglich, mit einer Antenne, die eine Linse aufweist, unterschiedliche Raumbereich zu vermessen, ohne dass sich die Messgenauigkeit wesentlich ändert. Der Vorteil besteht dabei gerade in der leichten Veränderbarkeit der Hauptabstrahlrichtung.

In den Fig. 2 und Fig. 3 werden zwei Varianten der erfindungsgemäßen Antenne 1 gezeigt, die es erlauben, die Hauptabstrahlrichtung zu verändern.

In der Ausgestaltung der Fig. 2 sind drei unterschiedliche Speiseelemente 2 vorgesehen, die jeweils an unterschiedlichen Bereichen mit der inneren Komponente 5 verbunden sind und diese dort jeweils mit einer elektromagnetischen Strahlung beaufschlagen. Die Strahlung wird dabei wie in der Fig. 1 von der Elektronikeinheit 9 erzeugt, die jedoch in der hier gezeigten Ausgestaltung über ein Verteilernetzwerk 10 mit den drei Speiseelementen 2 verbunden ist. Das Verteilernetzwerk 10 kann dabei auch ein Bestandteil der Elektronikeinheit 9 sein. Über das Verteilernetzwerk 10 wird ausgewählt, welches Speiseelement 2 die Strahlung emittiert. Da die Hauptabstrahlrichtung der Antenne 1 der Fig. 2 im Wesentlichen gleich der der Antenne der Fig. 1 sein soll, führt eine Auswahl der Speiseeinheiten 2 der Antenne 1 der Fig. 2 dazu, dass die Strahlung jeweils in einen anderen Raumbereich ausgestrahlt wird und dass dadurch der Füllstand in einem anderen Bereich vermessen wird. Wird während einer Messung die elektromagnetische Strahlung über das Verteilernetzwerk 10 abwechselnd auf die drei Speiseelemente 2 gegeben, so werden damit drei Bereiche der Oberfläche des - hier nicht dargestellten - Mediums vermessen, und es kann dadurch eine entsprechend genauere Aussage über den Füllstand getätigt werden.

Die Speiseelemente 2 sind insbesondere fest mit der inneren Komponente 5 verbunden. Da von der Linse 3 insgesamt nur drei Bereiche für die Umwandlung/Führung/Formung der Wellen verwendet werden, sind in einer Ausgestaltung die äußere Komponente 4 und die innere Komponente 5 inhomogen ausgestaltet, indem nur die jeweiligen Bereiche für die Umwandlung der von den Speiselementen 2 ausgehenden Wellen in Wellen mit ebenen Phasenfronten optimiert sind. Dabei ist in einer Ausgestaltung die sphärische Form der zwei Komponenten 4, 5 beibehalten.

Die Fig. 3 zeigt eine Alternative zur Ausgestaltung der Fig. 2, wobei jedoch beide Varianten auch miteinander kombiniert werden können. In der Ausgestaltung der Fig. 3 ist nur ein Speiseelement 2 vorgesehen, das fest über einen Einspeisebereich mit der inneren Komponente 5 verbunden ist. Dabei soll sich weiterhin eine Abstrahlcharakteristik der Linse 3 mit einer Hauptrichtung ergeben, die relativ zur inneren Komponente 5 dem Speiseelement 2 diametral gegenüberliegt. Die innere Komponente 5 ist in der äußeren Komponente 4 drehbar gelagert, wobei die Drehungen hier über eine Drehvorrichtung 11 erfolgen, die mit der inneren Komponente über eine Achse verbunden ist. Der Pfeil verdeutlicht eine mögliche Bahn der Drehung der inneren Komponente 5, über den auch die Bahn der Hauptabstrahlrichtung der Linse 3 beschreiben wird. Das Schwenken der inneren Komponente 5 mit dem festen Speiseelement 2 erlaubt damit eine Vielzahl von Messungen von unterschiedlichen Bereichen der Oberfläche des - hier nicht dargestellten - Mediums. Eingetragen ist hier auch - gestrichpunktet - die Hauptachse der Antenne 1.

In der Fig. 4 ist eine Messung mittels eines erfindungsgemäßen Füllstandmessgerätes 12 schematisch dargestellt. Das Messgerät 12 verfügt über eine oben beschriebene Antenne 3, die über ein Speiseelement 2 mit einer Elektronikeinheit 9 verbunden ist. Die Elektronikeinheit 9 erzeugt die elektromagnetischen Wellen, die über das Speiseelement 2 auf die Antenne 3 übertragen und von dieser in Wellen mit ebenen Phasenfronten umgewandelt werden. Die abgestrahlten Wellen treffen auf die Oberfläche des Mediums 13, werden dort reflektiert und gelangen wieder zu der Antenne 3. Bei dem Medium 13 in dem Tank 14 handelt es sich in dem gezeigten Beispiel um ein Schüttgut, dessen Oberfläche einen Schüttkegel aufweist. Für die genaue Messung des Füllstands reicht daher eine Messung nicht aus, sondern es werden vorzugsweise mehrere Bereiche der Oberfläche vermessen. Dies geschieht hier durch die Antenne 3, die es einfach erlaubt, die Hauptabstrahlrichtung der Mikrowellen zu verändern, ohne dass es dabei zu wesentlichen Änderungen der Abstrahlcharakteristik der Antenne 3 kommt.

## Patentansprüche

1. Nach dem Radar-Prinzip arbeitendes Füllstandmessgerät (12), das mindestens eine dielektrische Antenne (1) mit mindestens einem Speiseelement (2) und mit mindestens einer aus mindestens einem dielektrischen Material bestehenden Linse (3) aufweist, wobei das Speiseelement (2) elektromagnetische Strahlung emittiert und die Linse (3) mit der elektromagnetischen Strahlung beaufschlagt, wobei die Linse (3) die elektromagnetische Strahlung weiterführt und abstrahlt, wobei die Linse (3) mindestens eine äußere Komponente (4) und eine innere Komponente (5) aufweist, wobei das Speiseelement (2) die Linse (3) über die innere Komponente (5) mit der elektromagnetischen Strahlung beaufschlagt, wobei die äußere Komponente (4) zumindest eine teilweise sphärisch ausgestaltete Abstrahlfläche (6) und eine zumindest teilweise sphärisch ausgestaltete Innenfläche (7) aufweist und wobei die innere Komponente (5) eine zumindest teilweise sphärisch ausgestaltete Kontaktfläche (8) aufweist,
**dadurch gekennzeichnet,**
**dass** die innere Komponente (5) beweglich - insbesondere drehbar - mit der äußeren Komponente (4) verbunden ist und dass mindestens eine Drehvorrichtung (11) vorgesehen ist, die die innere Komponente (5) innerhalb der äußeren Komponente (4) dreht bzw. schwenkt.

2. Füllstandmessgerät (12) nach Anspruch 1, **dadurch gekennzeichnet, dass** die Kontaktfläche (8) der inneren Komponente (5) und die Innenfläche (7) der äußeren Komponente (4) derartig ausgestaltet und aufeinander abgestimmt sind, dass bei mindestens einer Anordnung von innerer Komponente (5) und äußerer Komponente (4) zueinander die innere Komponente (5) an der äußeren Komponente (4) im Wesentlichen spaltfrei anliegt und die äußere Komponente (4) die innere Komponente (5) zumindest teilweise umgibt.

3. Füllstandmessgerät (12) nach Anspruch 1 oder 2, **dadurch gekennzeichnet, dass** die äußere Komponente (4) teilweise als Kugelschale oder als Teil einer Hohlkugel ausgestaltet ist und dass die innere Komponente (5) im Weseitlichen als Kugel oder als Kugelschale oder teilweise als Kugel ausgestaltet ist.

4. Füllstandmessgerät (12) nach einem der Ansprüche 1 bis 3, **dadurch gekennzeichnet, dass** die äußere Komponente (4) und die innere Komponente (5) aus Materialien bestehen, die unterschiedliche Permittivitäten aufweisen.

5. Füllstandmessgerät (12) nach einem der Ansprüche 1 bis 4, **dadurch gekennzeichnet, dass** der Abstand zwischen dem mindestens einen Speiseelemente (2) und der inneren Komponente (5) veränderbar ist.

6. Füllstandmessgerät (12) nach einem der Ansprüche 1 bis 5, **dadurch gekennzeichnet, dass** mehrere Speiseelemente (2), mindestens eine Elektronikeinheit (9) und mindestens ein Verteilernetzwerk (10) vorgesehen sind, wobei die Elektronikeinheit (9) mindestens ein elektromagnetisches Signal erzeugt und wobei über das Verteilernetzwerk (10) einstellbar ist, welches Speiseelement (2) oder welche Speiseelemente (2) das von der Elektronikeinheit (9) erzeugte elektromagnetische Signal oder ein davon abhängiges elektromagnetisches Signal emittiert/emittieren.

## Claims

1. Fill level measuring device (12) operating using the radar principle, which has at least one dielectric antenna (1) having at least one supply element (2) and at least one lens (3) consisting of at least one dielectric material, wherein the supply element (2) emits electromagnetic radiation and supplies the lens (3) with the electromagnetic radiation, wherein the lens (3) leads the electromagnetic radiation further and emits it, wherein the lens (3) has at least one outer component (4) and one inner component (5), wherein the supply element (2) supplies the lens (3) with electromagnetic radiation via the inner component (5), wherein the outer component (4) has a radiating surface (6) that is at least partially spherical and an inner surface (7) that is at least partially spherical, and wherein the inner component (5) has a contact surface (8) that is at least partially spherical
**characterized in**
**that** the inner component (5) is joined in a moveable manner - in particular can be rotated - with the outer component (4) and that at least one rotating device (11) is provided that rotates or swings the inner component (5) within the outer component (4).

2. Fill level measuring device (12) according to claim 1, **characterized in that** the contact surface (8) of the inner component (5) and the inner surface (7) of the outer component (4) are designed and compatible in such a manner that in at least one arrangement of the inner component (5) and outer component (4) to one another, the inner component (5) lies flat against the outer component (4) essentially without a gap and the outer component (4) at least partially surrounds the inner component (5).

3. Antenna (1) according to claim 1 or 2, **characterized in that** the outer component (4) is designed partially as a spherical shell or as part of a hollow sphere and that the inner component (5) is essentially designed as a sphere or spherical shell or that the inner component (5) is designed partially as a sphere.

4. Fill level measuring device (12) according to any one of claims 1 to 3, **characterized in that** the outer component (4) and the inner component (5) consist of materials that have different permittivities.

5. Fill level measuring device (12) according to any one of claims 1 to 4, **characterized in that** the distance between the at least one supply element (2) and the inner component (5) is changeable.

6. Fill level measuring device (12) according to any one of claims 1 to 7, **characterized in that** several supply elements (2), at least one electronic unit (9) and at least one distribution network (10) are provided, wherein the electronic unit (9) generates at least one electromagnetic signal and wherein which the supply element (2) or supply elements (2) emits/emit the electromagnetic signal generated by the electronic unit (9) or an independent electromagnetic signal can be set via the distribution network (10).

## Revendications

1. Appareil de mesure de niveau de remplissage (12) fonctionnant selon le principe du radar, comprenant au moins une antenne diélectrique (1) comportant au moins un élément d'alimentation (2) et comportant au moins une lentille (3) constituée d'au moins un matériau diélectrique, dans lequel l'élément d'alimentation (2) émet un rayonnement électromagnétique et la lentille (3) est irradiée avec le rayonnement électromagnétique, dans lequel la lentille (3) transmet et émet le rayonnement électromagnétique, dans lequel la lentille (3) comprend au moins un composant extérieur (4) et un composant intérieur (5), dans lequel l'élément d'alimentation (2) irradie la lentille (3) avec le rayonnement électromagnétique à travers le composant intérieur (5), dans lequel le composant extérieur (4) comprend au moins une surface rayonnante (6) réalisée de manière partiellement sphérique et une surface interne (7) réalisée de manière au moins partiellement sphérique et dans lequel le composant interne (5) comprend une surface de contact (8) réalisée de manière au moins partiellement sphérique,
**caractérisé en ce que** le composant intérieur (5) est relié de manière mobile - notamment rotative - au composant extérieur (4) et **en ce qu'**il est prévu au moins un dispositif de mise en rotation (11) qui met en rotation ou fait pivoter le composant intérieur (5) à l'intérieur du composant extérieur (4).

2. Appareil de mesure de niveau de remplissage (12) selon la revendication 1, **caractérisé en ce que** la surface de contact (8) du composant intérieur (5) et la surface interne (7) du composant extérieur (4) sont adaptées l'une à l'autre de telle manière que dans au moins un agencement du composant intérieur (5) et du composant extérieur (4) l'un par rapport à l'autre, le composant intérieur (5) soit disposé sensiblement sans former d'interstice sur le composant extérieur (4) et à ce que le composant extérieur (4) entoure au moins partiellement le composant intérieur (5).

3. Appareil de mesure de niveau de remplissage (12) selon la revendication 1 ou 2, **caractérisé en ce que** le composant extérieur (4) est réalisé sous la forme d'une coquille sphérique ou d'une partie de sphère creuse et **en ce que** le composant intérieur (5) est réalisé sous la forme d'une bille ou d'une coquille sphérique ou partiellement sous la forme d'une bille.

4. Appareil de mesure de niveau de remplissage (12) selon l'une quelconque des revendications 1 à 3, **caractérisé en ce que** le composant extérieur (4) et le composant intérieur (5) sont constitués de matériaux qui présentent des permittivités différentes.

5. Appareil de mesure de niveau de remplissage (12) selon l'une quelconque des revendications 1 à 4, **caractérisé en ce que** la distance entre l'au moins un élément d'alimentation (2) et le composant intérieur (5) peut être modifiée.

6. Appareil de mesure de niveau de remplissage (12) selon l'une quelconque des revendications 1 à 5, **caractérisé en ce qu'**il est prévu une pluralité d'éléments d'alimentation (2), au moins une unité électronique (9) et au moins un réseau de distribution (10), dans lequel l'unité électronique (9) génère au moins un signal électromagnétique et dans lequel le réseau de distribution (10) est réglable, lequel élément d'alimentation (2) ou lesquels éléments d'alimentation (2) émet/émettent le signal électromagnétique généré par l'unité électronique (9) ou un signal électromagnétique dépendant de celui-ci.
